**Europäisches Patentamt**

**European Patent Office**

**Office européen des brevets**

(11) Numéro de publication : **0 357 469 B1**

(12) **FASCICULE DE BREVET EUROPEEN**

(45) Date de publication du fascicule du brevet :
**04.03.92 Bulletin 92/10**

(21) Numéro de dépôt : **89401848.0**

(22) Date de dépôt : **28.06.89**

(51) Int. Cl.⁵ : **F16D 55/22**, F16D 55/224

(54) **Ressort pour frein à disque.**

(30) Priorité : **29.08.88 FR 8811321**

(43) Date de publication de la demande :
**07.03.90 Bulletin 90/10**

(45) Mention de la délivrance du brevet :
**04.03.92 Bulletin 92/10**

(84) Etats contractants désignés :
**BE DE ES FR GB IT NL**

(56) Documents cités :
**EP-A- 0 002 399
FR-A- 2 582 365
FR-A- 2 616 186
GB-A- 2 132 292
US-A- 4 498 564**

(73) Titulaire : **BENDIX EUROPE Services
Techniques S.A.
126 rue de Stalingrad
F-93700 Drancy (FR)**

(72) Inventeur : **Mery, Jean-Claude
BENDIX FRANCE S.A. 126 rue de Stalingrad
F-93700 Drancy (FR)**
Inventeur : **Pindat, Michel
BENDIX FRANCE S.A. 126 rue de Stalingrad
F-93700 Drancy (FR)**

## Description

La présente invention a pour objet un ressort pour frein à disque à étrier coulissant ainsi qu'un frein à disque équipé d'un tel ressort.

L'invention vise plus particulièrement un ressort à fonctions multiples destiné à équiper un frein à disque dont l'étrier coulisse par rapport à un support fixe au moyen d'une colonnette axiale.

On connaît par le brevet français FR-A-2 582 365 au nom de la demanderesse, un ressort pour frein à disque du type comportant un étrier monté coulissant parallèlement à l'axe d'un disque tournant sur un support fixe au moyen d'au moins deux surfaces de coulissement axial, formées sur l'étrier et sur le support fixe et maintenues élastiquement en contact, et deux organes de friction reçus en ancrage et en coulissement axial dans une ouverture dudit support fixe, pour venir en engagement de friction avec les faces opposées dudit disque lors de l'actionnement d'un moteur de frein, ledit ressort étant monté élastiquement dans une ouverture, formé dans la voûte de l'étrier et exerçant sur les plaques support desdits organes de friction un effort radial dirigé sensiblement selon un rayon du disque et en direction de l'axe de ce dernier et un effort tangentiel perpendiculaire audit effort radial pour solliciter chacun des organes de friction tangentiellement à la circonférence dudit disque pour assurer le maintien de ces derniers dans une position latérale préférentielle.

Ce ressort connu est caractérisé en ce qu'il est constitué d'une lame métallique pliée comportant une portion de montage reliée élastiquement par ses côtés circonférentiellement espacés à deux portions d'action rigide une première portion rigide s'étendant parallèlement à l'axe du disque et étant susceptible de solliciter élastiquement par ses deux extrémités libres, lesdites plaques support dans une direction sensiblement circonférentielle, une deuxième desdites portions rigides s'étendant également parallèlement à l'axe du disque et étant susceptible de solliciter élastiquement par ses deux extrémités libres lesdites plaques support sensiblement radialement vers l'axe du disque.

Avec un tel agencement, le ressort est maintenu par sa portion de montage dans l'ouverture formée dans la voûte de l'étrier, ses portions d'action étant situées dans des logements creusés dans la voûte et adjacents à l'ouverture.

Les logements creusés dans la voûte ont pour effet de diminuer l'épaisseur de celle-ci, et donc sa robustesse. Il a donc été proposé, dans la demande de brevet français 87 07677, au nom de la demanderesse, un ressort simplifié par la suppression de la portion élastique et de la portion rigide qui applique des efforts sensiblement radiaux aux plaques de support. La suppression de ces efforts pouvait en effet être considérée comme acceptable avec une certaine orientation de l'effort appliqué par l'autre portion rigide du ressort sur la surface d'appui formée sur le flanc d'une saillie formée sur le côté périphérique de chacune des plaques support, et modifiée en conséquence. La suppression de cette partie du ressort permettait de réduire le logement creusé dans la voûte de l'étrier pour permettre le débattement de cette partie, ce qui avait pour effet d'améliorer la robustesse du frein équipé d'un tel ressort simplifié.

Cependant, la suppression des efforts sensiblement radiaux sur les plaques support a pour effet de permettre une plus grande liberté de mouvement aux plaques support, avec pour résultat, dans certaines utilisations, une mise en vibration des plaques support, se transmettant à l'étrier, et provoquant ainsi un bruit important et une usure prématurée des organes de friction et du frein. Il a été remarqué également que, lors de ces vibrations de l'étrier par rapport au support fixe, il se produit un certain matage des parties de l'étrier qui viennent au contact du support fixe ou de la goupille de verrouillage.

L'invention a donc pour objet un ressort pour frein à disque appliquant des efforts sensiblement radiaux sur les plaques support d'éléments de friction, sans diminuer l'épaisseur de la voûte de l'étrier. Elle a également pour but d'éviter le matage des parties de l'étrier qui sont amenées au contact des parties du support fixe ou de la goupille de verrouillage.

On atteint ce but de l'invention avec un ressort pour frein à disque du type comportant un étrier monté coulissant par rapport à l'axe du disque tournant, sur un support fixe par l'intermédiaire d'une colonnette axiale solidaire de l'étrier ou du support fixe et coopérant avec un alésage correspondant du support fixe ou de l'étrier, deux organes de friction portés par des plaques support reçues en ancrage et en coulissement axial dans une ouverture du support fixe pour venir en engagement de friction avec les faces opposées du disque lors de l'actionnement d'un moteur de frein, et un élément de verrouillage s'étendant axialement entre au moins une ouverture pratiquée dans l'étrier et au moins une ouverture pratiquée dans le support fixe pour coopérer au guidage de l'étrier sur le support fixe et s'opposer à son basculement autour de ladite colonnette lorsqu'il occupe sa position normale de fonctionnement, ce ressort étant constitué d'une lame métallique pliée comportant une portion de montage reliée élastiquement à une portion d'action rigide caractérisé en ce qu'il est monté sur l'étrier du côté circonférentiellement espacé de la colonnette axiale, la portion de montage étant montée élastiquement dans au moins une ouverture pratiquée dans l'étrier pour le passage de l'élément de verrouillage, la portion de montage entourant sensiblement la partie de l'élément de verrouillage traversant ladite ouverture, la portion d'action rigide étant susceptible de solliciter élastiquement les plaques support des organes de friction sensiblement radialement vers l'axe du disque.

On décrira maintenant, à titre d'exemple, un mode de réalisation d'un ressort selon la présente invention, en se référant aux dessins annexés dans lesquels :

– la Figure 1 représente vu de dessus un frein à disque muni d'un ressort réalisé selon la présente invention ;

– la Figure 2 est une vue en coupe transversale du frein à disque de la Figure 1 ;

– la Figure 3 est une vue de face du ressort selon l'invention ;

– la Figure 4 est une vue de côté du ressort selon l'invention ; et

– La Figure 5 est une vue de dessus du ressort selon l'invention.

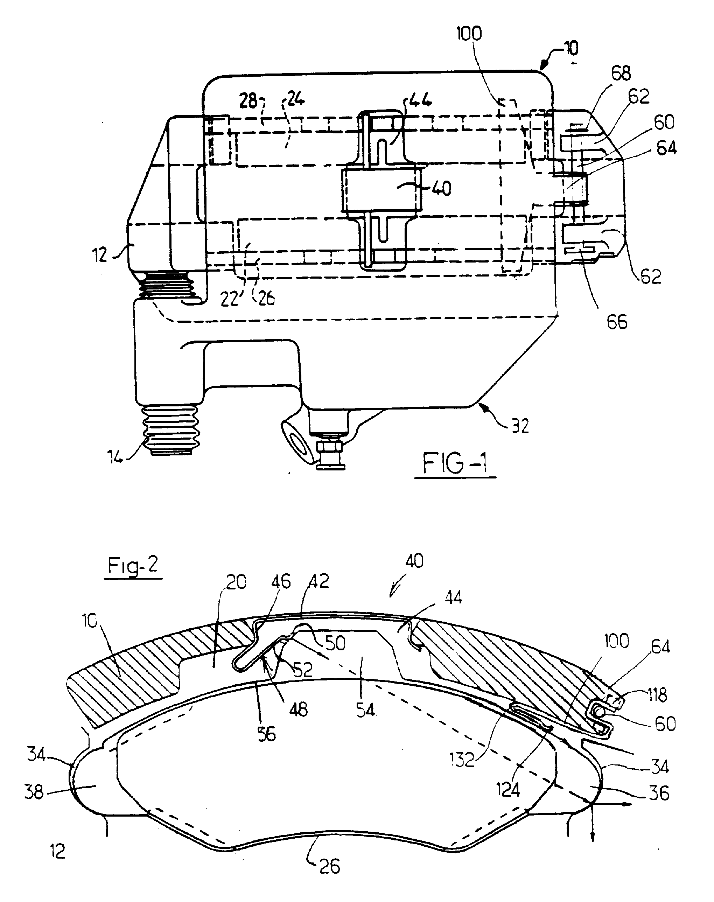

Le frein à disque représenté sur les Figures 1 et 2 est du type comportant un étrier 10, monté coulissant sur un support fixe 12, au moyen d'une colonnette axiale 14. Le frein à disque comporte en outre deux organes de friction 22 et 24, munis respectivement de plaques support 26 et 28, susceptibles de venir en engagement de friction avec un disque tournant, lors de l'actionnement d'un moteur hydraulique de frein 32. Les organes de friction 22 et 24 sont reçus en ancrage et en coulissement dans une ouverture 34 formée dans le support fixe 12. Dans l'exemple représenté, les deux organes de friction 22 et 24 ont des extrémités 36 et 38 possédant un profil circulaire coopérant avec des profils circulaires complémentaires de l'ouverture 34. Un tel type de frein est décrit et représenté plus en détail dans le brevet Européen EP-A-0 002 399. Pour ce type d'organes de friction, il est souhaitable d'exercer sur la plaque support un effort tangentiel qui maintienne cette dernière dans une position latérale préférentielle, en appui dans l'ouverture ménagée dans le support fixe 12.

Le frein à disque représenté Figures 1 et 2 est muni d'un ressort 40 constitué d'une lame métallique pliée qui comprend une portion de montage 42 ayant la forme générale de la lettre grecque majuscule oméga montée élastiquement dans une ouverture 44 formée dans la voûte de l'étrier 10.

Le côté 46 du ressort 40 est prolongé dans un logement 20 creusé dans la voûte de l'étrier 10 par une portion élastique 48 se terminant par une portion rigide 50 qui s'étend axialement de part et d'autre de la portion élastique 48. La portion rigide présente deux extrémités libres qui sollicitent chacune des plaques support 26, 28 sensiblement circonférentiellement par coopération avec des surfaces d'appui 52 formées sur le flanc d'une saillie 54 formée sur le côté périphérique 56 de chacune des plaques support 26 et 28. Cette portion rigide 50 exerce sur la saillie 54 un effort sensiblement tangentiel.

Pour que l'étrier 10 soit suffisamment robuste, il n'est pas possible de creuser à l'intérieur de celui-ci un deuxième logement pour que l'autre côté du ressort 40 soit conformé pour exercer un effort sensiblement radial sur les plaques support, comme indiqué dans la demande de brevet français 87 07677 précitée.

De façon connue, l'étrier 10 est maintenu en position par une goupille 60, passant dans des perçages ménagés dans des pattes 62 solidaires du support fixe, et dans une ouverture ménagée dans un prolongement 64 de l'étrier. La goupille, maintenue en place par sa tête élargie 66 et par un clip 68, s'oppose au basculement de l'étrier autour de l'axe de la colonnette 14 et coopère au guidage de l'étrier sur le support fixe. Elle peut être facilement effacée lorsqu'on désire basculer l'étrier autour de l'axe de la colonnette pour accéder aux organes de friction en vue d'un éventuel remplacement.

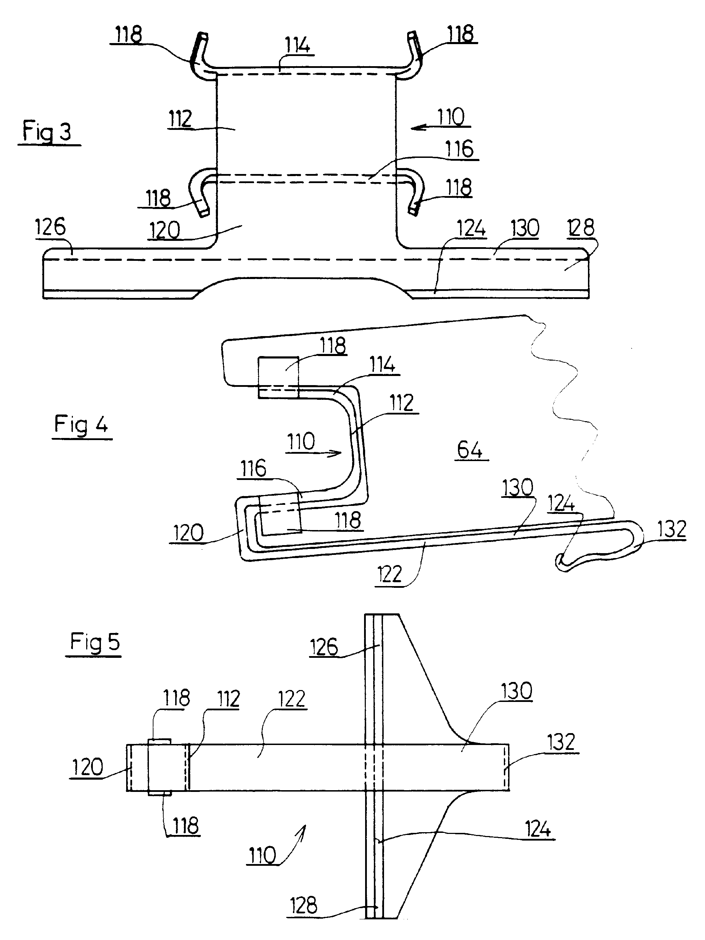

Le frein à disque représenté Figure 1 est mini d'un ressort 100 réalisé selon la présente invention, et plus particulièrement représenté Figures 3 à 5. Le ressort 100 est constitué d'une lame métallique pliée qui comprend une portion de montage 110 ayant en section la forme générale d'un U, montée élastiquement dans l'ouverture ménagée dans le prolongement 64 de l'étrier, et ayant une forme complémentaire. Cette portion de montage 110 comporte une base 112 réunissant deux parties latérales 114 et 116. Sur chaque partie latérale sont formées deux pattes 118 s'étendant à l'extérieur, maintenant le ressort latéralement dans l'ouverture et participant à son engagement élastique dans cette ouverture du prolongement 64.

L'une des parties latérales 116 est prolongée approximativement à angle droit par une portion rigide 120, elle-même prolongée approximativement à angle droit par une autre portion rigide 112, de façon à entourer le bord de l'ouverture dans le prolongement 64 et soutenir la portion d'action du ressort du côté de l'étrier adjacent aux plaques support des éléments de friction. Les trois portions rigides 116, 120 et 122 sont elles aussi conformées de façon à avoir une forme complémentaire du bord de l'ouverture dans le prolongement 64 et à participer au maintien élastique du ressort sur ce bord.

La portion rigide 122 est prolongée par une portion élastique 130 qui forme un pli prononcé 132 et se termine par une portion d'action rigide 124 forme de gouttière et s'étendant axialement de part et d'autre de la portion élastique 130. Cette portion rigide 124 présente deux extrémités libres 126 et 128 qui sollicitent chacune des plaques support 26 et 28 respectivement sensiblement radialement.

Par réaction à l'effort appliqué sur les plaques support 26 et 28, et par l'intermédiaire du pli 132 formé dans la portion élastique 130, la portion rigide 122 exerce sur le bord du prolongement 64 de l'étrier 10 un effort vers le haut en se référant à la Figure 2, cet effort de réaction maintenant en contact la portion de montage 110 du ressort 100 et la goupille 60 de verrouillage.

On comprend que grâce à l'invention, le ressort 100 est maintenu en place dans le prolongement 64 de l'étrier 10 par l'élasticité de sa portion de montage en "U" 110, par les pattes 118 et par la portion rigide 122, et ne risque pas d'être perdu ou détérioré lors du démontage ou du remontage des éléments de friction. De plus, lors du verrouillage de l'étrier 10 sur le support fixe 12 par la goupille 60, le ressort 110 est lui-même verrouillé sur l'étrier 10 et ne peut s'échapper. En fonctionnement normal du frein à disque, le ressort 100 sollicite l'étrier 10 radialement vers l'extérieur, en maintenant en contact la goupille 60 et le bord de l'ouverture pratiquée dans le prolongement 64 de l'étrier 10, la branche 116 de la portion de montage étant interposée entre eux. Dans le cas d'utilisation sévère, c'est-à-dire de sollicitation élevée, où l'ensemble est susceptible d'entrer en vibration, l'interposition de cette branche 116 entre la goupille 60, généralement en acier, et la partie de l'étrier qui l'entoure, généralement en fonte, évite que cette dernière partie ne soit matée par la goupille 60. Enfin, le ressort 100 coopère avec le ressort 40, le premier sollicitant les plaques support sensiblement radialement vers l'axe du disque, le second les sollicitant sensiblement cironférentiellement, selon les enseignements des trois brevets précités, avec l'avantage supplémentaire de pouvoir utiliser une voûte d'étrier renforcée, et des plaques support non modifiées.

Il est bien évident que l'invention n'est pas limitée au mode de réalisation décrit. Par exemple la portion de montage pourra être adaptée à la forme du ou des prolongements formés dans l'étrier et destinés à son verrouillage sur la partie fixe. De même on pourra prévoir de réaliser dans la portion élastique adjacente à la portion rigide une ouverture transversale pour réduire la charge appliquée par le ressort aux organes de friction quand ceux-ci se rapprochent du plan médian du ressort du fait de l'usure de ces organes de friction. De même, on pourra pratiquer une échancrure dans la portion d'action du ressort, comme indiqué en pointillés sur la Figure 5, pour séparer les extrémités de la portion rigide qui sollicitent les plaques support.

**Revendications**

1. Ressort (100) pour frein à disque, du type comportant un étrier (10) monté coulissant par rapport à l'axe du disque tournant, sur un support fixe (12) par l'intermédiaire d'une colonnette axiale (14) solidaire de l'étrier (10) ou du support fixe (12) et coopérant avec un alésage correspondant du support fixe (12) ou de l'étrier (10), deux organes de friction (22, 24) portés par des plaques support (26, 28) reçues en ancrage et en coulissement axial dans une ouverture du support fixe (12) pour venir en engagement de friction avec les faces opposées du disque lors de l'actionnement d'un moteur de frein (32) et un élément de verrouillage (60) s'étendant axialement entre au moins un ouverture pratiquée dans l'étrier (10) et au moins une ouverture pratiquée dans le support fixe (12) pour coopérer au guidage de l'étrier (10) sur le support fixe (12) et s'opposer à son basculement autour de la colonnette (14) lorsqu'il occupe sa position normale de fonctionnement, ce ressort (100) étant constitué d'une lame métallique pliée comportant une portion de montage (110) reliée élastiquement à une portion d'action rigide (124), caractérisé en ce qu'il est monté sur l'étrier (10) du côté circonférentiellement espacé de la colonnette axiale (14), la portion de montage (110) étant montée élastiquement dans au moins une ouverture pratiquée dans l'étrier pour le passage de l'élément de verrouillage (60), la portion de montage (110) entourant sensiblement la partie de l'élément de verrouillage (60) traversant ladite ouverture, la portion d'action rigide (124) étant susceptible de solliciter élastiquement les plaques support (26, 28) des organes de friction sensiblement radialement vers l'axe du disque.

2. Ressort selon la revendication 1 caractérisé en ce que la portion de montage (110) a en section, la forme générale d'un "U".

3. Ressort selon la revendication 2, caractérisé en ce que les parties latérales (114, 116) de la portion de montage (110) portent chacune deux pattes (118) s'étendant à l'extérieur de cette portion de montage.

4. Frein à disque du type comportant un étrier (10) monté coulissant sur un support fixe (12) au moyen d'une colonnette axiale (14) et un élément de verrouillage (60) s'étendant axialement entre au moins une ouverture pratiquée dans l'étrier (10) et au moins une ouverture pratiquée dans le support fixe (12) pour coopérer au guidage de l'étrier (10) sur le support fixe (12) et s'opposer à son basculement autour de la colonnette (14) lorsqu'il occupe sa position normale de fonctionnement, caractérisé en ce qu'il est équipé d'un ressort (100) selon l'une des revendications précédentes, ledit ressort sollicitant élastiquement ledit étrier (10) radialement vers l'extérieur.

5. Frein à disque selon la revendication 4, caractérisé en ce que l'élément de verrouillage (60), dans sa partie traversant l'ouverture pratiquée dans l'étrier (10), est sensiblement entouré par la portion de montage (110) du ressort (100).

**Patentansprüche**

1. Feder (100) für eine Scheibenbremse vom Typ mit: einem Sattel (10), der in Bezug auf die Achse der Drehscheibe auf einem festen Träger (12) mittels eines axialen Schaftes (14) gleitend gelagert ist, der mit dem Sattel (10) oder mit dem festen Träger (12) fest verbunden ist und mit einer entsprechenden Bohrung des festen Trägers (12) oder des Sattels (10) zusammenarbeitet; zwei Reibungselementen (22, 24), die von Trägerplatten (26, 28) getragen sind, welche in einer Öffnung des festen Trägers (12) verankert und axial gleitend aufgenommen sind, damit sie in Reibungseingriff mit den gegenüberliegenden Flächen der Scheibe bei Betätigung eines Bremsantriebs (32) kommen, sowie einem Verschlußelement (60), das sich axial zwischen wenigstens einer in dem Sattel (10) vorgesehenen Öffnung und wenigstens einer in dem festen Träger (12) vorgesehenen Öffnung erstreckt, um bei der Führung des Sattels (10) auf dem festen Träger (12) mitzuwirken und seinem Schwenken um den Schaft (14) herum entgegenzuwirken, wenn er sich in seiner normalen Betriebsstellung befindet, wobei diese Feder (100) aus einer metallischen, gebogenen Lamelle besteht, welche einen mit einem starren Wirkteil (124) elastisch verbundenen Montageteil (110) umfaßt, dadurch gekennzeichnet, daß sie auf dem Sattel (10) auf der Seite gelagert ist, die von dem axialen Schaft (14) in Umfangsrichtung beabstandet ist, wobei der Montageteil (110) in wenigstens einer Öffnung, die in dem Sattel für den Durchgang des Verschlußelementes (60) vorgesehen ist, elastisch gelagert ist, der den Teil des Verschlußelementes (60) im wesentlichen umhüllende Montageteil (110) diese Öffnung durchquert, wobei der starre Wirkteil (124) dazu geeignet ist, die Trägerplatten (26, 28) der Reibungselemente im wesentlichen radial zur Achse der Scheibe hin elastisch zu beaufschlagen.

2. Feder nach Anspruch 1, dadurch gekennzeichnet, daß der Montageteil (110) allgemein U-förmig im Querschnitt ist.

3. Feder nach Anspruch 2, dadurch gekennzeichnet, daß jeder der Seitenteile (114, 116) des Montageteils (110) zwei Lappen (118), die sich auf der Außenseite dieses Montageteils erstrecken, trägt.

4. Scheibenbremse vom Typ mit einem Sattel (10), der auf einem festen Träger (12) mittels eines axialen Schaftes (14) und eines Verschlußelementes (60) gleitend gelagert ist, der sich axial zwischen wenigstens einer in dem Sattel (10) vorgesehenen Öffnung und wenigstens einer in dem festen Träger (12) vorgesehenen Öffnung erstreckt, um bei der Führung des Sattels (10) auf dem festen Träger (12) mitzuwirken und seinem Schwenken um den Schaft (14) herum entgegenzuwirken, wenn es sich in seinem normalen Betriebsstellung befindet, dadurch gekennzeichnet, daß sie mit einer Feder (100) nach einem der vorstehenden Ansprüche versehen ist, wobei diese Feder diesen Sattel (10) radial nach Außen elastisch beaufschlagt.

5. Scheibenbremse nach Anspruch 4, dadurch gekennzeichnet, daß in seinem die in dem Sattel (10) vorgesehene Öffnung durchquerenden Teil das Verschlußelement (60) von dem Montageteil (110) der Feder (100) im wesentlichen umgeben ist.

## Claims

1. Spring (100) for a disc-brake of the type comprising a caliper (10) mounted slideably, relative to an axis of a rotating disc, on a fixed support (12) by means of an axial column integral (14) with the caliper (10) or the fixed support (12) and cooperating with a corresponding bore in the fixed support (12) or the caliper (10), two friction members (22,24) mounted on carrier plates (26,28) anchored and axially slideable inside an opening in the fixed support (12) so as to come into frictional engagement with opposing sides of the disc when a brake motor (32) is operated, and a locking element (60) extending axially between at least one opening formed in the caliper (10) and at least one opening formed in the fixed support (12) so as to help guide the caliper (10) on the fixed support (12) and prevent it pivoting about the column (14) when it assumes its normal operating position, said spring (100) consisting of a folded metal blade comprising a mounting portion (110) elastically joined to a rigid working portion (124), characterized in that it is mounted on the caliper (10) on a side located circumferentially at a distance from the axial column (14), the mounting portion (110) being elastically mounted inside at least one opening provided in the caliper to pass through, for the locking element, the mounting portion (110) surrounding substantially the part of the locking element (60) passing through said opening, the rigid working portion (124) being capable of biasing elastically the friction-member carrier plates (26,28) substantially radially towards the axis of the disc.

2. Spring according to Claim 1, characterized in that the mounting portion (110) has a general shape of a "U" in cross-section.

3. Spring according to Claim 2, characterized in that lateral parts (114, 116) of the mounting portion (110) each have two lugs (118) extending outside said mounting portion.

4. Disc-brake of the type comprising a caliper (10) mounted slideably on a fixed support (12) by means of an axial column (14) and a locking element (60) extending axially between at least one opening formed in the caliper (10) and at least one opening formed in the fixed support (12) so as to help guide the caliper (10) on the fixed support (12) and prevent it pivoting about the column (14) when it assumes its normal operating position, characterized in that it is provided with a spring (100) according one of the preceeding claims, said spring biaising elastically said caliper (10) radially outwardly.

5. The disc-brake according to Claim 4, characterized in that the part of the locking element (60) passing through the opening formed in the caliper (10) is substantially surrounded by the mounting portion (110) of the spring (100).

FIG-1

Fig-2

Fig 3

118    114    118

112                     110

116

118    118

126    120    124  130  128

Fig 4

118    114

112

110

116    64

120    118    130  124  132

122

Fig 5

126    130

118  112  122    132

120

118    110    124

128